# EUROPÄISCHE PATENTANMELDUNG

(11) **EP 3 401 582 A1**
(43) Veröffentlichungstag der Anmeldung: **14.11.2018**
(21) Anmeldenummer: 17170388.7
(22) Anmeldetag: 10.05.2017
(51) Int. Cl.: F16L 5/04, A62C 3/16, E04B 1/94, H02G 3/04

(54) **DICHTELEMENT UND BRANDSCHUTZSET MIT DICHTELEMENT**

(71) Anmelder: HILTI Aktiengesellschaft, 9494 Schaan (LI)
(72) Erfinder: Förg, Christian, 86862 Lamerdingen (DE); Weis, Jürgen, 86871 Rammingen (DE)
(74) Vertreter: Hilti Aktiengesellschaft Corporate Intellectual Property

(57) **Zusammenfassung**

Es wird ein Dichtelement (10) zum Abdichten von Wand- oder Deckendurchbrüchen (20) angegeben. Das Dichtelement weist mindestens eine Einfüllausnehmung (12) auf, welche an einem umlaufenden Rand des Dichtelements (10) angeordnet ist, und welche ausgebildet ist, um ein Befüllen eines hinter dem Dichtelement (10) befindlichen Hohlraums (19) zu ermöglichen, wenn das Dichtelement (10) in einem Wand- oder Deckendurchbruch (20) montiert ist. Des Weiteren wird ein Brandschutzset zum Abdichten von Wand- oder Deckendurchbrüchen (20) angegeben. Das Brandschutzset weist mindestens ein Dichtelement (10) mit einer Einfüllausnehmung (12) auf, welche an einem umlaufenden Rand des Dichtelements (10) angeordnet ist, sowie eine Einfüllhilfe (32) und mindestens einen Stopfen (34), wobei der Stopfen (34) ausgebildet ist, um die Einfüllausnehmung (12) des Dichtelements (10) zu verschließen.

## Beschreibung

Die vorliegende Erfindung betrifft ein Dichtelement und ein Brandschutzset mit einem Dichtelement zum Abdichten von Wand- oder Deckendurchbrüchen.

Bei Leitungsdurchführungen durch Wände oder Raumdecken werden häufig mechanische Verpresssysteme eingesetzt, um die geltenden Anforderungen hinsichtlich Brandschutz und Wasserdichtigkeit zu erfüllen. Solche Systeme sind jedoch aufwendig in der Installation, da an jede einzelne Leitung ein zu verpressendes Kunststoffelement angepasst werden muss.

Des Weiteren sind Vergusssysteme bekannt, welche einen speziellen Rahmen aufweisen, der zunächst in einen abzudichtenden Durchbruch eingepasst werden muss und nach dem Durchführen der Leitungen mit einer Dichtmasse gefüllt wird.

Bei den genannten Systemen muss der Rahmen jeweils separat zum Durchbruch hin abgedichtet werden, was die Installation zusätzlich erschwert.

Es ist daher eine Aufgabe der vorliegenden Erfindung, ein Dichtelement anzugeben, mit welchem eine Abdichtung eines Wand- oder Deckendurchbruchs besonders einfach und ohne zusätzliche Rahmensysteme erfolgen kann.

Diese Aufgabe wird gelöst durch ein Dichtelement zum Abdichten von Wand- oder Deckendurchbrüchen, insbesondere Wanddurchbrüchen, aufweisend mindestens eine Einfüllausnehmung, welche an einem umlaufenden Rand des Dichtelements angeordnet und ausgebildet ist, um ein Befüllen eines hinter dem Dichtelement befindlichen Hohlraums zu ermöglichen, wenn das Dichtelement in einem Wanddurchbruch montiert ist, bzw. zu erleichtern, wenn das Dichtelement in einem Deckendurchbruch montiert ist.

Ein derartiges Dichtelement hat den Vorteil, dass ein Abdichten eines Durchbruchs ermöglicht wird, ohne dass zuvor ein zusätzliches Rahmensystem oder Dichtbänder in dem Durchbruch installiert werden müssen. Das Dichtelement kann schnell und einfach mit einem Handgriff in den Durchbruch eingesetzt werden und dient dabei sowohl als Brandschutzelement als auch als Schalungshilfe.

Die Einfüllausnehmung ist vorzugsweise halbrund ausgebildet. Dies hat den Vorteil, dass separate Einfüllhilfen, beispielsweise Trichter oder Rohre, besonders einfach in die Einfüllausnehmung einführbar sind und diese während eines Befüllvorgangs mit einem flüssigen Dichtmaterial verschließen. Insbesondere kann dadurch vermieden werden, dass ein noch nicht ausgehärtetes Dichtmaterial zwischen der Einfüllhilfe und dem Dichtelement auslaufen kann. Dennoch sind beispielsweise eckige Einfüllausnehmungen nicht ausgeschlossen.

Das Dichtelement kann eine Einfüllhilfe aufweisen, welche an der Einfüllausnehmung anschließt. Insbesondere ist die Einfüllhilfe einteilig mit dem Dichtelement ausgebildet. Dadurch wird der Vorteil erreicht, dass der Anwender keine separate Einfüllhilfe mehr benötigt. Der Arbeitsaufwand beim Abdichten eines Durchbruchs wird auf diese Weise erheblich reduziert.

Die Einfüllhilfe kann als Rinne ausgebildet sein. Das Profil der Einfüllhilfe kann an die Form der Einfüllausnehmung angepasst sein. Vorzugsweise weist die Einfüllhilfe ein halbkreisförmiges Profil auf.

Ein flüssiges Dichtmaterial kann somit an einer beliebigen Stelle auf die Einfüllhilfe gegossen werden und in der Einfüllhilfe bis zur Einfüllausnehmung und durch diese hindurch hinter das Dichtelement in einen Durchbruch fließen, wenn das Dichtelement in einer Wand oder einer Decke montiert ist.

Gemäß einem Aspekt der Erfindung weist das Dichtelement einen Hauptkörper auf, welcher plan ausgebildet ist, wobei die Einfüllhilfe mit dem Hauptkörper einen stumpfen Winkel einschließt.

Der Hauptkörper wird bei einer Montage des Dichtelements in dem Durchbruch platziert. Durch die plane Ausbildung des Hauptkörpers schließt dieser in montiertem Zustand eben mit einer Wand ab. Der Hauptkörper weist in einer Draufsicht beispielsweise eine im Wesentlichen runde Außenkontur auf. Jedoch kann der Hauptkörper auch eine eckige oder anders geformte Außenkontur aufweisen, je nachdem für welchen Durchbruch das Dichtelement geeignet sein soll. Insbesondere ist der Hauptkörper als Scheibe ausgebildet.

Dass die Einfüllhilfe mit dem Hauptkörper einen stumpfen Winkel einschließt, hat den Vorteil, dass wenn das Dichtelement in einer vertikalen Wand montiert ist, die Einfüllhilfe in eine Richtung von der Wand weg schräg nach oben verläuft. Die Einfüllhilfe läuft sozusagen wie eine Rutsche zu der Einfüllausnehmung hin, so dass flüssiges Dichtmaterial von selbst über die Einfüllhilfe durch die Einfüllausnehmung fließt. Dazu muss natürlich das Dichtelement in der richtigen Orientierung in einen Durchbruch gesteckt werden, so dass die Einfüllhilfe in montiertem Zustand des Dichtelements nach oben zeigt.

In einer alternativen Ausführungsform kann die Einfüllhilfe mit dem Hauptkörper des Dichtelements einen spitzen Winkel einschließen. Dies ist dann vorteilhaft, wenn das Dichtelement zur Abdichtung eines Durchbruchs im Boden geeignet sein soll. In diesem Fall kann das Dichtelement in einer beliebigen Orientierung im Durchbruch eingesetzt werden. Die Einfüllhilfe verläuft dann beispielsweise von der Einfüllausnehmung weg in eine Richtung nach oben und zur Mitte des Dichtelements hin.

Gemäß einer Ausführungsform erstreckt sich die Einfüllhilfe in einer Richtung parallel zu einer Hauptausdehnungsfläche des Dichtelements über einen umlaufenden Rand des Hauptkörpers hinweg. Die Hauptausdehnungsfläche ist die Fläche, in der sich der Hauptkörper des Dichtelements in einer Draufsicht auf das Dichtelement erstreckt. Das Dichtelement hat dadurch in einer Draufsicht die Form eines Schlüssellochs.

Dadurch ergibt sich der Vorteil, dass sich die Einfüllhilfe nach oben über den Durchbruch hinaus erstreckt, wenn das Dichtelement in der richtigen Orientierung in einem Durchbruch einer vertikalen Wand montiert ist. Dadurch kann der Durchbruch vorteilhafterweise bis zu seinem Rand und ein Stück weit darüber hinaus mit flüssigem Dichtmaterial gefüllt werden kann, ohne dass das Dichtmaterial auslaufen kann. So kann sichergestellt werden, dass der Durchbruch vollständig mit Dichtmaterial ausgefüllt ist, ohne dass ein Luftspalt im Durchbruch verbleibt.

Nach dem Aushärten des Dichtmaterials kann die Einfüllhilfe wahlweise abgeschnitten werden, um eine möglichst ebene Wandfläche zu erhalten.

An einem umlaufenden Rand des Dichtelements, insbesondere an einem umlaufenden Rand des Hauptkörpers, kann eine Einführschräge angeordnet sein. Der Hauptkörper hat dadurch, wenn man die Einfüllausnehmung außer Betracht lässt, die Form eines Kegelstumpfes. Durch die Einführschräge kann das Dichtelement leicht in einen Durchbruch eingeführt und anschließend durch Eindrücken in dem Durchbruch verklemmt werden.

Das Dichtelement ist vorzugsweise komprimierbar. Dadurch wird der Vorteil erreicht, dass das Dichtelement leichte Größenschwankungen von Wand- oder Deckendurchbrüchen ausgleichen kann. Vorzugsweise weist das Dichtelement gegenüber dem abzudichtenden Durchbruch ein Übermaß auf, so dass der Durchbruch immer zuverlässig abgedichtet wird.

Um die Komprimierbarkeit des Dichtelements zu erreichen, kann das Dichtelement einen Schaum aufweisen oder als Schaumteil ausgebildet sein. Insbesondere kann das Dichtband einen offenzelligen Schaum aufweisen oder aus einem solchen bestehen. Dadurch ist eine hohe Bewegungsaufnahme des Dichtprofils möglich.

Gemäß einer Ausführungsform weist das Dichtelement mindestens eine Öffnung auf, welche zum umlaufenden Rand des Dichtelements beabstandet ist. Die Öffnung ist ausgebildet, um mindestens eine Leitung aufzunehmen. Zu diesem Zweck kann die Öffnung eine oder mehrere runde Aussparungen beinhalten.

Die mindestens eine Öffnung kann in dem Dichtelement vorgefertigt sein. Vorzugsweise ist das Dichtelement aus einem leicht zu bearbeitenden Material hergestellt, so dass ein Benutzer die vorgefertigten Öffnungen anpassen kann oder selbst weitere Öffnungen aus dem Dichtelement herausschneiden kann.

Das Dichtelement kann ein hitze- und/oder feuerhemmendes und/oder wasserdichtes und/oder schalldämmendes Material aufweisen oder aus einem solchen Material bestehen. Im Brandfall kann sich auf dem Dichtelement eine Aschekruste bilden, welche zusätzlich das Eindringen von Wasser verhindern kann.

Die Aufgabe wird des Weiteren gelöst durch ein Brandschutzset zum Abdichten von Wand- oder Deckendurchbrüchen, aufweisend mindestens ein Dichtelement mit einer Einfüllausnehmung, welche an einem umlaufenden Rand des Dichtelements angeordnet ist, eine Einfüllhilfe und mindestens einen Stopfen, wobei der Stopfen ausgebildet ist, um die Einfüllausnehmung des Dichtelements zu verschließen.

Das Dichtelement kann wie vorhergehend beschrieben ausgebildet sein.

Mit dem Brandschutzset kann ein Benutzer auf besonders einfache Weise, ohne vorherige Montage eines zusätzlichen Rahmensystems, einen Wand- und/oder Deckendurchbruch zuverlässig abdichten.

Das Brandschutzset kann auch mehrere Dichtelemente und Stopfen aufweisen, so dass der Benutzer unter Verwendung derselben Einfüllhilfe mehrere Durchbrüche abdichten kann. Dies ist aus Kostengründen vorteilhaft, da nicht für jeden Durchbruch eine neue Einfüllhilfe verwendet werden muss. Bevorzugt ist die Oberfläche des Dichtelements mit einer Beschichtung versehen, die zu dem flüssigen Dichtmaterial keine Haftung aufbaut. Die Beschichtung kann beispielsweise ein Trennmittel, eine Teflon- oder Silikonbeschichtung sein. Alternativ können die Dichtelemente selbst aus einem solchen Material bestehen.

Der Stopfen kann in die Einfüllausnehmung des Dichtelements eingesetzt werden, bevor das Dichtmaterial vollständig ausgehärtet ist. So kann ein Auslaufen von Dichtmaterial verhindert werden.

Das Brandschutzset kann zusätzlich Dichtelemente ohne eine Einfüllausnehmung aufweisen. Dies hat den Vorteil, dass eine Rückseite eines Durchbruchs mit einem Dichtelement ohne eine Einfüllausnehmung komplett abgedichtet werden kann, während nur an einer Vorderseite eines Durchbruchs ein Dichtelement mit einer Einfüllausnehmung angeordnet wird. Der Hohlraum, der zwischen den beiden Dichtelementen entsteht, kann anschließend über die Vorderseite, wo das Dichtelement mit der Einfüllausnehmung angeordnet ist, mit einem flüssigen Dichtmaterial aufgefüllt werden.

Alternativ kann eine Rückseite des Durchbruchs mit einem aushärtenden Brandschutzschaum oder mit einer Platte abgedichtet werden.

Die Einfüllhilfe weist vorzugsweise ein Rohr und/oder eine Rinne und/oder einen Trichter auf. Dadurch ermöglicht die Einfüllhilfe ein besonders einfaches Befüllen eines Hohlraums zwischen zwei Dichtelementen über die Einfüllausnehmung.

Die Einfüllhilfe kann zumindest teilweise in die Einfüllausnehmung des Dichtelements einführbar sein, wenn das Dichtelement in einem Wand- oder Deckendurchbruch montiert ist. Vorzugsweise verschließt die Einfüllhilfe dabei die Einfüllausnehmung. Somit kann verhindert werden, dass während dem Befüllen des Hohlraums flüssiges Dichtmaterial an dem Dichtelement ausläuft.

Das Brandschutzset kann außerdem eine Haltevorrichtung aufweisen, wobei die Haltevorrichtung ausgebildet ist, um die Einfüllhilfe in einer festen Position relativ zu dem Dichtelement zu halten, wenn das Dichtelement in einem Wand- oder Deckendurchbruch montiert ist.

Die Haltevorrichtung weist beispielsweise eine Rohrschelle auf, in der die Einfüllhilfe eingeklemmt werden kann. Die Einfüllhilfe kann so bis zum Aushärten des Dichtmaterials in einer Position gehalten werden, ohne dass ein Benutzer den Trockenvorgang überwachen muss. Wenn das Dichtmaterial ausgehärtet ist, können die Haltevorrichtung und die Einfüllhilfe entfernt werden. Auf diese Weise kann verhindert werden, dass selbst kleine Mengen von Dichtmaterial auslaufen. Somit ist der Durchbruch besonders zuverlässig abgedichtet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1: ein erfindungsgemäßes Dichtelement gemäß einer ersten Ausführungsform;
- Figur 2: das Dichtelement aus Figur 1 in einer Schnittdarstellung;
- Figuren 3 bis 6: mehrere Schritte beim Befüllen eines Wanddurchbruchs mit einem Dichtelement gemäß den Figuren 1 und 2;
- Figur 7: ein erfindungsgemäßes Dichtelement gemäß einer zweiten Ausführungsform in einer Draufsicht; und
- Figuren 8 bis 10: mehrere Schritte beim Befüllen eines Wanddurchbruchs mit einem Dichtelement gemäß Figur 7.

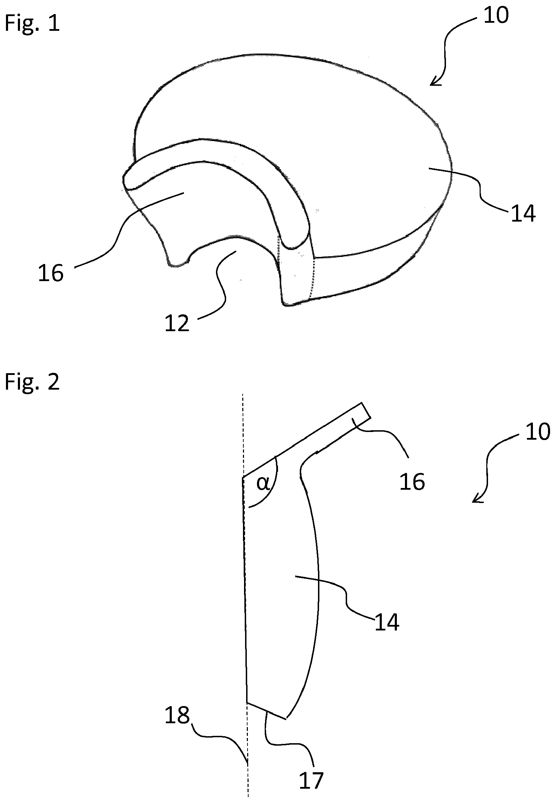

Figur 1 zeigt ein Dichtelement 10 gemäß einer ersten Ausführungsform der vorliegenden Erfindung. Das Dichtelement 10 weist eine Einfüllausnehmung 12, einen Hauptkörper 14 und eine Einfüllhilfe 16 auf.

Die Einfüllausnehmung 12 ist als halbrunde Ausnehmung ausgebildet. Sie ist an einem umlaufenden Rand des Hauptkörpers 14 angeordnet. Die Einfüllhilfe 16 ist einteilig mit dem Hauptkörper 14 ausgebildet und schließt direkt an die Einfüllausnehmung 12 an. Insbesondere ist die Einfüllhilfe 16 als Rinne mit einem halbrunden Profil ausgebildet.

Das Dichtelement 10 kann einen Schaum aufweisen oder als Schaumteil ausgebildet sein. Insbesondere ist das Dichtelement 10 komprimierbar. Dadurch kann das Dichtelement 10 in Durchbrüche unterschiedlicher Größe eingesetzt werden.

Das in Figur 1 dargestellte Dichtelement 10, insbesondere der Hauptkörper 14, ist im Wesentlichen als runde Scheibe ausgebildet. Der Hauptköper 14 des Dichtelements 10 kann jedoch auch andere Geometrien aufweisen, die geeignet sind, einen Wand- oder Deckendurchbruch abzudichten. Auf einer Seite ist der Hauptkörper leicht bauchig ausgebildet. Dies kann herstellungstechnische Gründe haben.

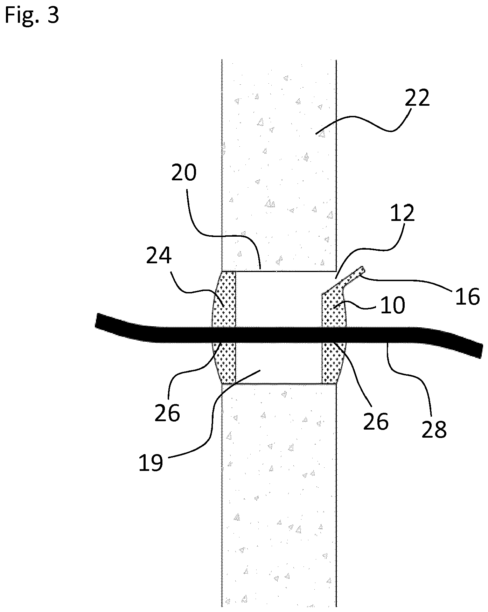

Figur 2 zeigt das Dichtelement 10 in einer Seitenansicht. Die Einfüllhilfe 16 schließt mit dem Hauptkörper 14 einen stumpfen Winkel α ein. Dadurch verläuft die Einfüllhilfe 16 in eine Richtung schräg nach oben, wenn das Dichtelement 10 in einer Wand 22 montiert ist, wie in Figur 3 gezeigt. Ein flüssiges Dichtmaterial 30 kann so über die Einfüllhilfe 16 in einen Hohlraum 19 hinter dem Dichtelement 10 laufen.

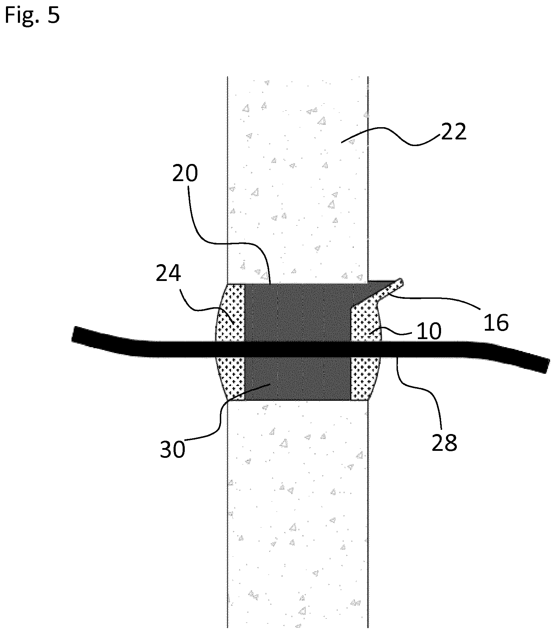

Der Hauptkörper 14 des Dichtelements 10 erstreckt sich im Wesentlichen entlang einer Hauptausdehnungsfläche 18, welche in Figur 2 durch eine gestrichelte Linie angedeutet ist. Die Einfüllhilfe 16 erstreckt sich in eine Richtung parallel zur Hauptausdehnungsfläche 18 über einen umlaufenden Rand des Hauptkörpers 14 hinaus. Dadurch kann ein Auslaufen von flüssiger Dichtmasse verhindert werden, wenn das Dichtelement 10 in einem Wanddurchbruch montiert ist. Dies wird in Zusammenhang mit Figur 5 deutlich.

An einem umlaufenden Rand des Dichteelements 10 ist eine Einführschräge 17 angeordnet, welche eine Montage des Dichtelements 10 in einem Durchbruch vereinfacht.

Figur 3 zeigt ein Dichtelement 10, welches in einem Durchbruch 20 einer Wand 22 montiert ist. An einer Rückseite des Durchbruchs 20 ist ein weiteres Dichtelement 24 montiert, welches jedoch keine Einfüllhilfe und keine Einfüllausnehmung aufweist. Grundsätzlich kann das Dichtelement 24 aber auch durch ein Dichtelement 10 mit einer Einfüllhilfe ersetzt werden. Dann könnte der Hohlraum 19 von beiden Seiten befüllt werden.

Die beiden Dichtelemente 10, 24 weisen jeweils eine Öffnung 26 auf, durch welche eine Leitung 28 verläuft.

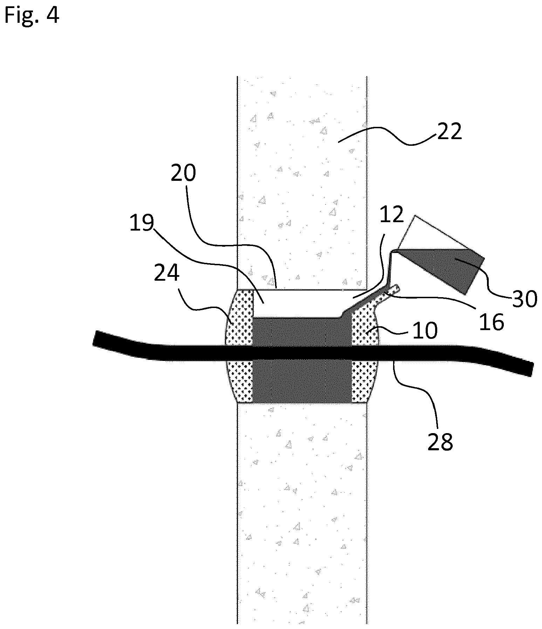

In den Figuren 4 bis 6 wird das Befüllen des Hohlraums 19 mit einem flüssigen Dichtmaterial 30 beschrieben.

Wie in Figur 4 gezeigt, wird flüssiges Dichtmaterial 30 durch die Einfüllausnehmung 12 in den zwischen den Dichtelementen 24 und 10 gebildeten Hohlraum 19 gegossen. Dabei wird das Dichtmaterial 30 jedoch nicht direkt in die Einfüllausnehmung 12 geschüttet, sondern beispielsweise aus einer Kanne zunächst auf die rinnenförmige Einfüllhilfe 16. Da die Einfüllhilfe 16 schräg nach oben absteht, läuft das Dichtmaterial 30 von selbst durch die Einfüllausnehmung 12 in den Hohlraum 19.

Es wird so viel Dichtmaterial 30 in den Hohlraum 19 gegossen, bis der Durchbruch 20 über einen oberen Punkt hinaus mit Dichtmaterial 30 angefüllt ist. Dieser Zustand ist in Figur 5 dargestellt. Der Hohlraum 19 wird somit vollständig mit Dichtmaterial 30 aufgefüllt, ohne dass Lufteinschlüsse im Hohlraum 19 verbleiben.

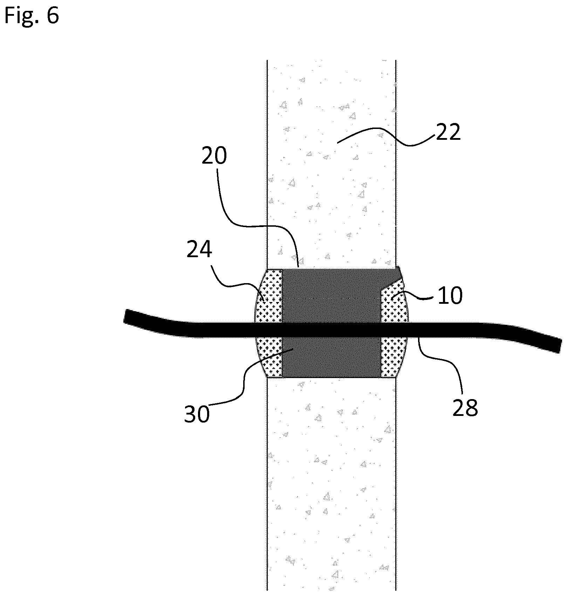

Wie in Figur 6 gezeigt, kann nach dem Aushärten des Dichtmaterials 30 die Einfüllhilfe 16 zusammen mit einem Teil des ausgehärteten Dichtmaterials abgeschnitten werden. Dadurch bleibt eine Außenfläche der Wand 22 eben, und die Einfüllhilfe 16 stört nicht bei einem nachfolgenden Verputzen der Wand.

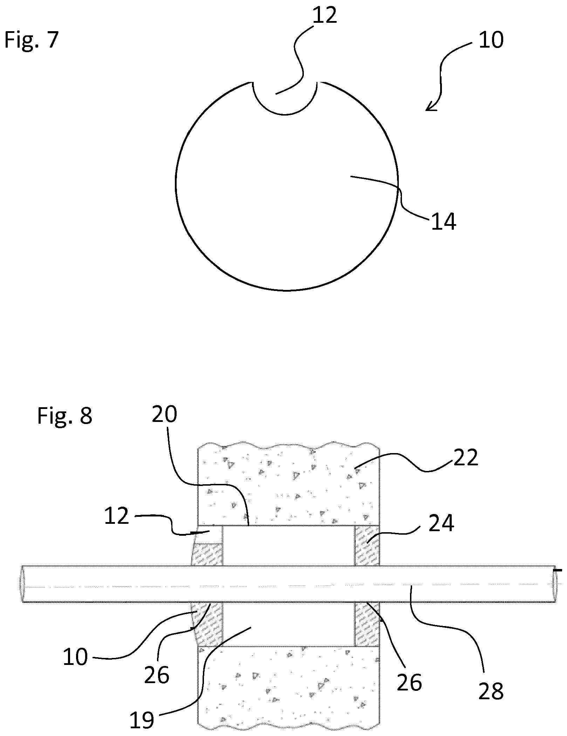

Figur 7 zeigt ein Dichtelement 10 gemäß einem weiteren Aspekt der Erfindung. Das Dichtelement 10 weist einen Hauptkörper 14 und eine Einfüllausnehmung 12 auf.

Figur 8 zeigt das Dichtelement 10 gemäß Figur 7 in einem in einer Wand 22 montierten Zustand. Insbesondere ist das Dichtelement 10 an einer vorderen Seite eines Durchbruchs 20 montiert. An einer hinteren Seite des Durchbruchs 20 ist ein weiteres Dichtelement 24 montiert. Sowohl das Dichtelement 10 als auch das Dichtelement 24 weisen Öffnungen 26 auf, durch welche eine Leitung 28 verläuft. Zwischen den Dichtelementen 10, 24 befindet sich ein Hohlraum 19.

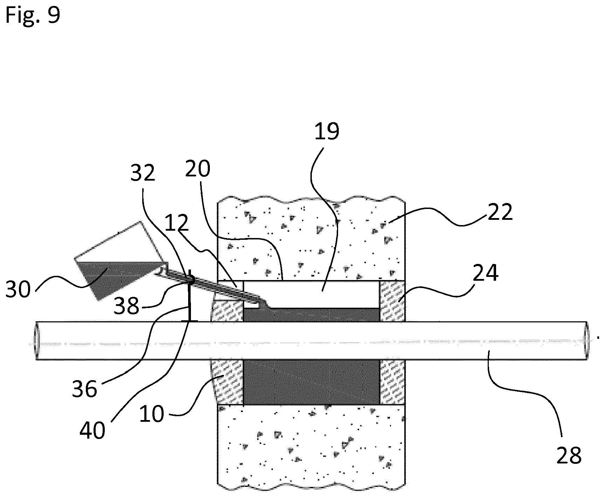

Figur 9 zeigt das Befüllen des Hohlraums 19 mit flüssigem Dichtmaterial 30. Zu diesem Zweck ist eine Einfüllhilfe 32 durch die Einfüllausnehmung 12 geführt. Die Einfüllhilfe 32 ist als Rinne ausgebildet, sie kann jedoch auch als Rohr oder Trichter ausgebildet sein. Wie in Figur 9 gezeigt, wird das flüssige Dichtmaterial 30 aus einer Kanne oder einem ähnlichen Gefäß auf die Einfüllhilfe 32 gegossen, sodass das flüssige Dichtmaterial 30 durch die Einfüllausnehmung 12 in den Hohlraum 19 fließen kann.

Dabei kann die Einfüllhilfe 32 entweder von Hand oder durch eine Haltevorrichtung 36 gehalten werden. Die Haltevorrichtung 36 weist eine Rohrschelle 38 auf, in der die Einfüllhilfe 32 eingeklemmt ist. Zudem kann die Haltevorrichtung 36 ein weiteres Befestigungsmittel 40 aufweisen, beispielsweise einen Standfuß oder eine weitere Rohrschelle, um die Haltevorrichtung 36 während des Trockenvorgangs in einer stabilen Position zu halten. Beispielsweise kann die Haltevorrichtung 36 mit einer weiteren Rohrschelle an der Leitung 28 befestigt sein.

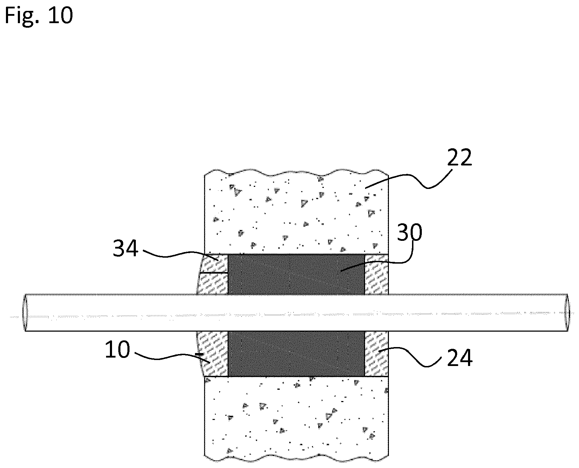

In Figur 10 ist die Einfüllausnehmung 12 des Dichtelements 10 mit einem Stopfen 34 verschlossen. Der Stopfen 34 kann aus demselben Material ausgebildet sein wie das Dichtelement 10. Durch den Stopfen 34 wird gewährleistet, dass das Dichtmaterial 30 bis zum vollständigen Aushärten in dem Hohlraum 19 verbleibt und nicht ausläuft.

Das Dichtelement 10, die Einfüllhilfe 32 und der Stopfen 34 bilden zusammen ein Brandschutzset.

## Patentansprüche

1. Dichtelement (10) zum Abdichten von Wand- oder Deckendurchbrüchen (20), aufweisend mindestens eine Einfüllausnehmung (12), welche an einem umlaufenden Rand des Dichtelements (10) angeordnet und ausgebildet ist, um ein Befüllen eines hinter dem Dichtelement (10) befindlichen Hohlraums (19) zu ermöglichen, wenn das Dichtelement (10) in einem Wand- oder Deckendurchbruch (20) montiert ist.

2. Dichtelement (10) nach Anspruch 1, **dadurch gekennzeichnet, dass** das Dichtelement (10) eine Einfüllhilfe (16) aufweist, wobei die Einfüllhilfe (16) an der Einfüllausnehmung anschließt.

3. Dichtelement (10) nach Anspruch 2, **dadurch gekennzeichnet, dass** die Einfüllhilfe (16) als Rinne ausgebildet ist.

4. Dichtelement (10) nach einem der Ansprüche 2 oder 3, **dadurch gekennzeichnet, dass** das Dichtelement (10) einen Hauptkörper (14) aufweist, welcher plan ausgebildet ist, wobei die Einfüllhilfe (16) mit dem Hauptkörper (14) einen stumpfen Winkel (α) einschließt.

5. Dichtelement (10) nach einem der Ansprüche 2 bis 4, **dadurch gekennzeichnet, dass** sich die Einfüllhilfe (16) in eine Richtung parallel zu einer Hauptausdehnungsfläche (18) des Dichtelements (10) über einen umlaufenden Rand des Hauptkörpers (14) hinweg erstreckt.

6. Dichtelement (10) nach einem der vorhergehenden Ansprüche, **dadurch gekennzeichnet, dass** an dem umlaufenden Rand des Dichtelements (10) eine Einführschräge (17) angeordnet ist.

7. Dichtelement nach einem der vorhergehenden Ansprüche, **dadurch gekennzeichnet, dass** das Dichtelement komprimierbar ist.

8. Dichtelement (10) nach einem der vorhergehenden Ansprüche, **dadurch gekennzeichnet, dass** das Dichtelement (10) mindestens eine Öffnung (26) aufweist, welche zum umlaufenden Rand des Dichtelements (10) beabstandet ist.

9. Dichtelement (10) nach einem der vorhergehenden Ansprüche, **dadurch gekennzeichnet, dass** das Dichtelement (10) ein hitze- und/oder feuerhemmendes und/oder wasserdichtes Material aufweist oder aus einem solchen Material besteht.

10. Brandschutzset zum Abdichten von Wand- oder Deckendurchbrüchen (20), aufweisend mindestens ein Dichtelement (10) mit einer Einfüllausnehmung (12), welche an einem umlaufenden Rand des Dichtelements (10) angeordnet ist, eine Einfüllhilfe (32) und mindestens einen Stopfen (34), wobei der Stopfen (34) ausgebildet ist, um die Einfüllausnehmung (12) des Dichtelements (10) zu verschließen.

11. Brandschutzset nach Anspruch 10, **dadurch gekennzeichnet, dass** die Einfüllhilfe (32) ein Rohr und/oder eine Rinne und/oder einen Trichter aufweist.

12. Brandschutzset nach einem der Ansprüche 10 oder 11, **dadurch gekennzeichnet, dass** die Einfüllhilfe (32) zumindest teilweise in die Einfüllausnehmung (12) des Dichtelements (10) einführbar ist.

13. Brandschutzset nach einem der Ansprüche 10 bis 12, **dadurch gekennzeichnet, dass** das Brandschutzset eine Haltevorrichtung (36) aufweist, wobei die Haltevorrichtung (36) ausgebildet ist, um die Einfüllhilfe (32) in einer festen Position relativ zu dem Dichtelement (10) zu halten, wenn das Dichtelement (10) in einem Wand- oder Deckendurchbruch (20) montiert ist.

14. Brandschutzset nach Anspruch 13, **dadurch gekennzeichnet, dass** die Haltevorrichtung (36) eine Rohrschelle (38) umfasst.
